(19) Europäisches Patentamt
European Patent Office
Office européen des brevets

(11) **EP 2 794 938 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(21) Anmeldenummer: **12829207.5**

(22) Anmeldetag: **20.12.2012**

(51) Int Cl.:
*C21D 10/00* *(2006.01)*          *C22F 3/00* *(2006.01)*

(86) Internationale Anmeldenummer:
**PCT/DE2012/001214**

(87) Internationale Veröffentlichungsnummer:
**WO 2013/091606 (27.06.2013 Gazette 2013/26)**

(54) **VERFAHREN ZUR STRUKTURIERUNG UND CHEMISCHEN MODIFIKATION EINER OBERFLÄCHE EINES WERKSTÜCKS**

METHOD FOR STRUCTURING AND CHEMICALLY MODIFYING A SURFACE OF A WORKPIECE

PROCÉDÉ DE STRUCTURATION ET DE MODIFICATION CHIMIQUE D'UNE SURFACE D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2011 DE 102011121545**

(43) Veröffentlichungstag der Anmeldung:
**29.10.2014 Patentblatt 2014/44**

(73) Patentinhaber: **Airbus Defence and Space GmbH 82024 Taufkirchen (DE)**

(72) Erfinder:
• BRANDL, Erhard
  85117 Eitensheim (DE)
• KURTOVIC, Ante
  33106 Paderborn (DE)
• MERTENS, Tobias
  85640 Putzbrunn (DE)
• RAPS, Dominik
  81547 München (DE)

(74) Vertreter: **Kastel, Stefan et al
Kastel Patentanwälte
St.-Cajetan-Straße 41
81669 München (DE)**

(56) Entgegenhaltungen:
WO-A1-89/05707          WO-A1-98/03600
DE-A1-102009 054 394    US-A- 4 947 023
US-A- 4 947 023         US-A1- 2008 299 408

**Beschreibung**

**Gebiet der Erfindung**

Die Erfindung betrifft ein Verfahren zur Strukturierung einer Oberfläche eines Werkstücks, bei dem Oberflächenstrukturen mit Abmessungen im Sub-Mikrometerbereich erzeugt werden, wobei die Oberfläche gleichzeitig chemisch modifiziert wird, sowie Werkstücke mit damit herstellbaren Oberflächen.

**Stand der Technik**

Die Benetzbarkeit mit und Haftung von flüssigen, halbfesten und festen Substanzen auf Metallen und Metalloxiden hängt stark von der Oberflächenbeschaffenheit ab. Dies ist bei der Behandlung mit oder Aufbringung und Haftung von Materialien wie beispielsweise Klebstoff, Lack, Lot, Dichtmittel oder auch biologischem Gewebe von hoher Bedeutung. Entfettung und anderweitige weitere Reinigung sowie Beizen erhöhen die Benetzbarkeit und Haftung bis zu einem gewissen Grad. Mit zunehmender Rauigkeit der Oberfläche, d.h. größerer und strukturierterer Oberfläche und dadurch erhöhter chemischer/mechanischer Verankerung aufzubringender Materialien, verbessern sich diese Eigenschaften aber noch wesentlich. Mit Anodisierprozessen kann z.B. ebenfalls eine zufriedenstellende Rauigkeit der Oberfläche erreicht werden, jedoch sind die Verfahren technisch relativ aufwändig und beinhalten teilweise gesundheitsgefährdende Chemikalien. Ein weiterer Nachteil ist, dass die Anodisierprozesse auf ein bestimmtes Metall abgestimmt werden müssen. Außerdem bestehen Anodisierprozesse aus mehreren einzelnen Prozessschritten wie einem vorherigen Reinigen und Beizen vor dem eigentlichen Anodisierprozess.

Die EP 0 914 395B1 beschreibt ein Verfahren zur Behandlung einer ungereinigten Metalloberfläche, das die Behandlung der Oberfläche mit einem Organosilan und das Belichten der Oberfläche mit einem Laser umfasst.

Aus der US 4 947 023 A ist ein Verfahren zum Mattieren einer metallischen Walzenoberfläche mittels eines Laserstrahls mit einer kleineren ständigen Laserausstoßleistung, die durch Pulse mit größerer Leistung überlagert ist, unter Stickstoff-, Sauerstoff- oder Argonatmosphäre bekannt, wobei in regelmäßigem Muster beabstandete Krater mit Wallhöhen zwischen 1-2 $\mu$m und Kratertiefen von 2-6 $\mu$m und weiter durch die ständige Laserausstoßleistung eine thermisch beeinflusste Zone dazwischen erzeugt werden.

Die chemische Modifikation von Metall- oder Metalloxidoberflächen durch Einbau von Atomen oder Molekülen, die in der Ausgangsoberfläche nicht vorhanden waren, oder durch Entfernung von Atomen oder Molekülen, die in der Ausgangsoberfläche vorhanden waren, ist bekannt: dazu gehören Anodisierungsverfahren, z.B. Schwefelsäureanodisierung, Chromschwefelsäureanodisierung (US 4,473,446), Natronlaugeanodisierung (US 4394224), NaTESi-Anodisierung (DE 3427543), oder Plasmavorbehandlung (Leahy, W., Young, T., Buggy, M. and Barron, V. (2003), A Study of Environmentally Friendly Titanium Pretreatments for Adhesive Bonding to a Thermoplastic Composite. Materialwissenschaft und Werkstofftechnik, 34: 415-420. doi: 10.1002/mawe.200390086) und kann vielfältigen Zwecken dienen, z.B. der Aktivierung oder Passivierung, der Reibungsverringerung oder der Hydrophobierung der Oberfläche, wodurch z.B. ein erhöhter Korrosionsschutz und Verschleißschutz, eine erhöhte Benetzbarkeit beim Kleben oder eine Vereisungsverhütung erreicht werden kann.

Es war ein Ziel der Erfindung, ein einfaches Verfahren zur Erzeugung einer guten Rauigkeit auf einer Metall(legierungs)oberfläche zu entwickeln, bei dem die Oberfläche gleichzeitig gezielt chemisch modifiziert wird.

**Zusammenfassung der Erfindung**

Zum Erreichen dieses Ziels schlägt die Erfindung ein Werkstück nach Anspruch 1 vor. Bevorzugte Ausgestaltungen des Werkstücks sind Gegenstand der abhängigen Ansprüche.

Die Erfindung betrifft ein Werkstück, umfassend eine Oberfläche aus einem Metall oder einer Metalllegierung oder einer Metalloxid- oder Metalllegierungsoxidschicht auf der Oberfläche des Metalls oder der Metalllegierung, wobei die Oberfläche eine chemisch modifizierte Oberflächenstruktur aufweist, die erzeugbar ist, indem die gesamte Oberfläche des Metalls oder der Metalllegierung oder der Metall- oder der Metalllegierungsoxidschicht auf dem Metall oder der Metalllegierung, die für eine Laserbestrahlung zugänglich ist und auf der die Strukturen zu erzeugen sind, mit einem gepulsten Laserstrahl ein- oder mehrmals auf solche Weise abgetastet wird, dass benachbarte Lichtflecke des Laserstrahls lückenlos aneinander stoßen oder sich überlappen, wobei die folgenden Bedingungen:

$$\text{etwa } 0{,}07 \leq \varepsilon \leq \text{etwa } 2300$$

mit

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_V} \cdot \sqrt{c_P} \cdot \sqrt{\lambda}} \cdot 10^3$$

worin:

$P_p$: Impulsspitzenleistung der austretenden Laserstrahlung [kW]
$P_m$: Mittlere Leistung der austretenden Laserstrahlung [W]
t: Impulslänge der Laserimpulse [ns], wobei t etwa 0,1 ns bis etwa 2000 ns ist,
f: Repetitionsrate der Laserimpulse [kHz]
v: Abtastgeschwindigkeit an der Werkstückoberfläche [mm/s]
d: Durchmesser des Laserstrahls am Werkstück [$\mu$m]
$\alpha$: Absorption der Laserstrahlung des bestrahlten Material [%] bei Normalbedingungen
$\lambda$: Wellenlänge der Laserstrahlung [nm], wobei $\lambda$ = etwa 100 nm bis etwa 11000 nm
$T_v$: Siedepunkt des Materials [K] bei Normaldruck
$c_p$: Spezifische Wärmekapazität [J/kgK] bei Normalbedingungen
$\kappa$: Spezifische Wärmeleitfähigkeit [W/mK] bei Normalbedingungen

derart eingehalten werden, dass an der Oberfläche offenporige, zerklüftete und/oder fraktalartige Nanostrukturen, wie offenporige Berg- und Tal-Strukturen, offenporige hinterschnittene Strukturen und blumenkohlartige oder knollenartige Strukturen erzeugt werden, deren Abmessungen mit Ausnahme der Tallängen der Berg- und Tal-Strukturen unter 1 $\mu$m liegen, wobei die Länge der Täler bei den Berg- und Talstrukturen mehr als 1 $\mu$m beträgt, wobei mindestens 80% Erhebungen eine Größe im Bereich von 10 nm bis 200 nm aufweisen, wobei mindestens etwa 80% der Zwischenräume Breiten < 1 $\mu$m aufweisen,
wobei die Atmosphäre, in der das Verfahren durchgeführt wird, ein mit der Oberfläche des Metalls oder der Metalllegierung oder der Metall- oder der Metalllegierungsoxidschicht auf dem Metall oder der Metalllegierung reagierendes Gas oder Gasgemisch ist.

## Kurze Beschreibung der Figuren

Figur 1 zeigt eine REM-Aufnahme der Oberflächenstruktur einer in Argonatmosphäre nanostrukturierten Ti-6Al-4V Probe.

Figur 2 zeigt eine REM-Aufnahme der Oberflächenstruktur einer in Stickstoffatmosphäre nanostrukturierten Ti-6Al-4V Probe.

**Figur 3** zeigt eine REM-Aufnahme der Oberflächenstruktur einer in Sauerstoffatmosphäre nanostrukturierten Al 2024 Probe.

Figur 4 zeigt eine REM-Aufnahme der Oberfläche einer unbehandelten Al 2024 Probe.

**Figur 5** zeigt den Vergleich zwischen dem abrasiven Verschleiß einer Ti-6Al-4V-Oberfläche, die in Argonatmosphäre nanostrukturiert worden ist, und dem abrasiven Verschleiß einer Ti-6Al-4V-Oberfläche, die in Stickstoffatmosphäre nanostrukturiert worden ist.

## Detaillierte Beschreibung

Wie eingangs erwähnt, ist die Aufrauhung bzw. Strukturierung im SubmikrometerBereich von Metall-, Metalllegierungs-, Metalloxid- und Metalllegierungsoxid-Oberflächen für eine gute Haftung von Klebstoffen, Lacken und sonstigen Beschichtungen essentiell. Eine zusätzliche chemische Modifikation der Oberfläche eröffnet die Möglichkeit, der Oberfläche weitere Eigenschaften, wie z.B. eine weitergehende Aktivierung, eine Passivierung, Reibungsverringerung oder Hydrophobierung zu verleihen, wodurch z.B. ein erhöhter Korrosionsschutz und Verschleißschutz, eine höhere Härte, ein höherer Widerstand gegen Rissinitiierung, eine erhöhte Benetzbarkeit beim Kleben oder eine Vereisungsverhütung erzielt werden kann.

Es wurde nun überraschend gefunden, dass lediglich durch eine einmalige oder mehrmalige Bestrahlung mit einem gepulsten Laser unter den in Anspruch 1 genannten Bedingungen chemisch modifizierte sub-mikrostrukturierte (oder nanostrukturierte) Metall- und Metalllegierungsoberflächen sowie, falls die Oberflächen durch eine Oxidschicht passiviert sind, sub-mikrostrukturierte (oder nanostrukturierte) Metall(legierungs)oxid-Oberflächen erzeugt werden können, die für eine ausgezeichnete Haftung von Klebstoffen, Lacken, Lot, Dichtmittel und/oder Ähnlichem sowie von biologischem Gewebe oder sonstigen Beschichtungen sorgen können, aber auch einen erhöhten Korrosionsschutz und Verschleißschutz, eine höhere Härte oder eine Vereisungsverhütung bereitstellen können. Wenn zwei Metalle oder ein Metall mit einem anderen Werkstoff durch einen Walzprozess bei Raumtemperatur (z.B. Kaltwalzen von Gold) oder bei erhöhten Temperaturen (z.B. Kumulatives Rollwalzen - Accumulative Roll Bonding, Laserwalzplattieren) oder durch einen Mikroschmiedeprozess (z.B. Kaltgasspritzen) miteinander verbunden werden, kann auch die Haftung dieser gefügten Materialien erhöht werden, wenn auf mindestens einer Seite erfindungsgemäß Nanostrukturen erzeugt worden sind.

Die erzeugten Oberflächen können je nach Ausführungsform im Allgemeinen offenporige, zerklüftete und/oder fraktalartige Nanostrukturen, wie offenporige Berg- und Tal-Strukturen, offenporige hinterschnittene Strukturen und blumenkohl- oder knollenartige Strukturen, aufweisen. Mindestens etwa 80%, bevorzugt mindestens etwa 90%, noch bevorzugter mindestens etwa 95% Erhebungen weisen eine Größe < 1 $\mu$m auf, die sich zum Beispiel im Bereich von etwa 10 nm bis etwa 200 nm bewegt. Mindestens etwa 80%, bevorzugt mindestens etwa 90%, noch bevorzugter mindestens etwa 95% der Zwischenräume weisen ebenfalls Breiten < etwa 1 $\mu$m auf, z.B. etwa 10 nm bis etwa 50 nm. Die Länge der "Täler" bei Berg- und Tal-Strukturen beträgt jedoch häufig mehr als etwa 1 $\mu$m.

Derartige Nanostrukturen bedecken in der Regel zumindest etwa 90 % der als Ebene berechneten Oberfläche, bevorzugt mindestens etwa 95 %. Bei optimal abgestimmten Prozessparametern (insbesondere Repetitionsrate, Abtastgeschwindigkeit und Fokusdurchmesser) kann die Nanostruktur sogar etwa 100% der als Ebene berechneten Oberfläche bedecken.

Das Abtasten der Oberfläche mit dem Laserstrahl kann einmal oder mehrmals hintereinander durchgeführt werden. Durch mehrmaliges Abtasten kann unter Umständen eine noch feinere Struktur erzeugt werden.

Gewöhnlich wird die Metall- oder Metalloxidoberfläche vor dem Abtasten mit dem Laserstrahl nicht vorbehandelt oder gereinigt, obwohl dies nicht ausgeschlossen wird; z.B. kann die Oberfläche mit einem Lösungsmittel gereinigt oder gebeizt werden. Es kann sogar in einem Abtastvorgang eine Abtragung einer vorwiegend organischen Schicht, wie z.B. einer Klebstoff- oder Lackschicht, und eine Nanostrukturierung/chemische Oberflächenmodifikation erzielt werden. Die Oberfläche wird bevorzugt vor dem Abtasten mit einem Laserstrahl nicht mit einem Haftvermittler, wie beispielsweise einem Silanhaftvermittler, einem Titanat, wie Titatetraisopropylat oder Titanacetylacetonat, einem Zirconat, wie Zirconiumtetrabutylat, einem Zirconiumaluminat, einemThiazol, einem Triazol, wie 1H-Benzotriazol, einem Phosphonat oder einem Sulfonat, zur Erhöhung der Haftfestigkeit an ein mit der Oberfläche zu verbindendes oder auf diese aufzubringendes Material behandelt. Auch nach dem Abtasten wird häufig kein derartiger Haftvermittler aufgebracht.

Das bzw. die gegebenenfalls mit einer Oxidschicht überzogene Metall oder Metalllegierung, bei dem bzw. der das erfindungsgemäße Verfahren durchgeführt werden kann, unterliegt keinen Beschränkungen. Es bzw. sie kann beispielsweise aus Eisen, Aluminium, Tantal, Kupfer, Nickel, Magnesium oder Titan oder einer Legierung derselben ausgewählt sein, z.B. aus Ti-6Al-4V, Rein-Titan, Mg-4Al1-Zn, Ta-10W, Cu-OF, CuZn37, Al 2024 (Al-4.4Cu-1.5Mg-0.6Mn), V2A-Stahl (X5CrNi18-10) und Inconel 718® (hochwarmfeste Nickellegierung mit Ni-19Cr-18Fe-5Nb-3Mo-0,05C (Werkstoffnr. 2.4668)) ausgewählt sein.

Der Siedepunkt bei Normaldruck, die spezifische Wärmekapazität $c_p$ bei Normalbedingungen, die spezifische Wärmeleitfähigkeit $\kappa$ bei Normalbedingungen und die Absorption der Laserstrahlung des bestrahlten Material $\alpha$ bei Normalbedingungen, die in den oben erwähnten Ausdruck für $\varepsilon$ einzusetzen sind, sind demnach einfach Materialeigenschaften des behandelten Metalls oder der behandelten Metalllegierung. Bei mit einer Oxidschicht bedeckten Metallen oder Metalllegierungen werden die Daten des bzw. der zugrunde liegenden Metalls oder Metalllegierung verwendet.

Es sollte noch erwähnt werden, dass naturgemäß nur solche Oberflächenbereiche behandelt werden können, die von einem Laserlicht erreicht werden können. Bereiche, die vollständig "im Schatten" (z.B. bei hinterschnittenen Geometrien) liegen, können auf die hierin beschriebene Weise nicht strukturiert werden.

Der Mechanismus der Oberflächenstrukturierung unter gleichzeitiger chemischer Modifikation der Oberfläche des Metall oder der Metalllegierung oder der Oxidschicht auf dem Metall oder der Metalllegierung wird derzeit nicht vollständig verstanden. Es wird jedoch angenommen, dass die chemische Oberflächenmodifikation durch das Entstehen sehr reaktiver Atome oder Atomgruppen aus dem Gas im Laserstrahl und deren Eindringen in die Oberfläche des laserbelichteten und dadurch teilweise geschmolzenen Materials erfolgt, wo sie entweder verbleiben oder sich mit einem weiteren Atom in der Oberfläche verbinden und diese wieder verlassen.

Bei dem mit der Oberfläche des Metalls oder der Metalllegierung oder der Metall- oder der Metalllegierungsoxidschicht auf dem Metall oder der Metalllegierung reagierenden Gas oder Gasgemisch kann es sich im Prinzip um jedes Gas oder Gasgemisch mit Ausnahme der Edelgase handeln, wobei natürlich das Ausmaß der Reaktion von dem jeweiligen Gas und der jeweiligen Oberfläche abhängt.

Zu den reagierenden Gasen gehören beispielsweise anorganische Gase oder Gasgemische, wie z.B. Wasserstoff, Luft, Sauerstoff, Stickstoff, Halogene, Kohlenstoffmonoxid, Kohlenstoffdioxid, Ammoniak, Stickstoffmonoxid, Stickstoffdioxid, Distickstoffmonoxid, Schwefeldioxid, Schwefelwasserstoff, Borane und/oder Silane (z.B. Monosilan und/oder Disilan).

Organische Gase oder Gase mit organischen Gruppen können ebenfalls eingesetzt werden. Dazu gehören z.B. niedere, gegebenenfalls halogenierte Alkane, Alkene und Alkine, wie Methan, Ethan, Ethen (Ethylen), Propen (Propylen), Ethin (Acetylen), Methylfluorid, Methylchlorid und Methylbromid, sowie Methylamin und Methylsilan. Auch eine Mischung eines anorganischen und organischen oder organische Gruppen enthaltenden Gases kann verwendet werden.

Wenn ein Gasgemisch vorliegt, genügt es, dass ein Gasbestandteil desselben oder eine Mischung von mehreren Gasbestandteilen ein reagierendes Gas ist; bei dem Rest kann es sich um ein inertes Gas, in der Regel ein Edelgas, handeln. Die Konzentration des reagierenden Gases oder Gasgemisches kann von wenigen ppb, z.B. 5 ppb, bis zu mehr als 99 Vol.-% variieren.

Die Auswahl des Gases oder Gasgemisches hängt natürlich von der beabsichtigten Modifikation der Metall-, Metalllegierungs-, Metalloxid oder Metalllegierungsoxid-Oberfläche ab. Wenn eine Metalloxidoberfläche aktiviert werden soll, d.h. in reines nanostrukturiertes Metall überführt werden soll, wird man natürlich in erster Linie Wasserstoff als reagierendes Gas (gegebenenfalls in Mischung mit einem inerten Gas) in Betracht ziehen, um der Oberfläche Sauerstoff zu entziehen. Für eine Härtung der Oberfläche wird man hingegen häufig ein stickstoff-, sauerstoff- oder kohlenstoffhaltiges Gas in Betracht ziehen, aus dem sich Stickstoff-, Sauerstoff- oder Kohlenstoffatome in die Oberfläche einlagern. Dem Fachmann ist bekannt, welches reagierende Gas er wählen muss, um damit bei einem gegebenen metallischen Werkstoff oder gegebenenfalls dessen mit Oxid überzogener Oberfläche einen gewünschten Effekt zu erzielen.

Der Druck des Gases oder Gasgemisches liegt im Allgemeinen im Bereich von etwa 0,001 mbar bis etwa 15 bar. Es kann bei Gastemperaturen gearbeitet werden, die außerhalb des Laserstrahls im Allgemeinen im Bereich von etwa -50°C bis etwa 350°C liegen. Im Laserstrahl können natürlich wesentlich höhere Temperaturen entstehen.

Eine erfolgte chemische Modifikation einer gegebenen Oberfläche kann durch geeignete Analyseverfahren, wie XPS (X-Ray Photoelectron Spectroscopy), EDX (Energy Dispersive X-Ray Analysis), FTIR-Spektroskopie, TOF-SIMS (Time of Flight Secondary Ion Mass Spectrometry), EELS (Electron Energy Loss Spectroscopy), HAADF (High Angle Annular Dark Field) oder NIR (Near Infrared Spectroscopy) überprüft werden.

Der Werte von $\varepsilon$, die sich aus den Parametern der oben angegebenen Gleichung ergeben müssen, damit die erfindungsgemäß angestrebte Oberflächenstrukturierung erzeugt wird, liegen bevorzugt bei etwa $0{,}07 \leq \varepsilon \leq$ etwa 2000, mehr bevorzugt bei etwa $0{,}07 \leq \varepsilon \leq$ etwa 1500.

Im Folgenden werden bevorzugte Parameter des Verfahrens der Erfindung angegeben. Es muss betont werden, dass alle Parameter unabhängig voneinander variiert werden können.

Die Impulslänge der Laserimpulse t beträgt vorzugsweise etwa 0,1 ns bis etwa 300 ns, mehr bevorzugt etwa 5 ns bis etwa 200 ns.

Die Impulsspitzenleistung der austretenden Laserstrahlung $P_p$ beträgt vorzugsweise etwa 1 kW bis etwa 1800 kW, mehr bevorzugt etwa 3 kW bis etwa 650 kW.

Die mittlere Leistung der austretenden Laserstrahlung $P_m$ beträgt vorzugsweise etwa 5 W bis etwa 28000 W, mehr bevorzugt etwa 20 W bis etwa 9500 W.

Die Repetitionsrate der Laserimpulse f beträgt vorzugsweise etwa 10 kHz bis etwa 3000 kHz, mehr bevorzugt etwa 10 kHz bis etwa 950 kHz.

Die Abtastgeschwindigkeit an der Werkstückoberfläche v beträgt vorzugsweise etwa 30 mm/s bis etwa 19000 mm/s, mehr bevorzugt etwa 200 mm/s bis etwa 9000 mm/s.

Der Durchmesser des Laserstrahls am Werkstück d beträgt vorzugsweise etwa 20 $\mu$m bis etwa 4500 $\mu$m, mehr bevorzugt etwa 50 $\mu$m bis etwa 3500 $\mu$m.

Die Laserwellenlänge $\lambda$ kann, wie oben erwähnt, etwa 100 nm bis etwa 11000 nm betragen. Als Laser können z.B. Festkörperlaser, wie z.B. Nd:YAG ($\lambda$ = 1064 nm oder 533 nm oder 266 nm), Nd:YVO$_4$ ($\lambda$ = 1064 nm), Diodenlaser mit z.B. $\lambda$ = 808 nm, Gaslaser, wie z.B. Excimer-Laser, mit z.B. KrF ($\lambda$ = 248 nm) oder H$_2$ ($\lambda$ = 123 nm bzw. 116 nm) oder ein CO$_2$-Laser (10600 nm) benutzt werden.

Die erfindungsgemäß erzeugten chemisch modifizierten Oberflächen können z.B. für eine ausgezeichnete Haftung von Klebstoffen, Lacken und sonstigen Beschichtungen sorgen. Ferner können chemisch modifizierte nanostrukturierte Oberflächen erzeugt werden, die eine hohen Korrosions- oder Abriebbeständigkeit zeigen oder sehr hydrophob sind, was die Anhaftung von wässrigen Medien, Eis und biologischen Organismen erschwert oder verhindert.

In Ausführungsformen des Verfahrens der Erfindung wird nach der Strukturierung der Oberfläche die Oberfläche mit oder ohne Klebstoff mit einer Oberfläche eines zweiten Werkstücks zu einem Werkstückverbund zusammengefügt oder mit einem einer Beschichtung versehen wird oder chemisch modifiziert.

Wenn auf mindestens einem Metall oder Metalloxid erfindungsgemäß eine chemische Modifikation aufweisende Nanostrukturen erzeugt worden sind, können zwei Metalle, ein Metall und ein Metalloxid oder zwei Metalloxide oder ein Metall oder Metalloxid mit einem anderen Werkstoff durch bloßes Fügen unter erhöhtem Druck, wie durch einen Walzprozess bei Raumtemperatur (z.B. Kaltwalzen von chemisch modifiziertem Gold) oder bei erhöhten Temperaturen (z.B. Kumulatives Rollwalzen - Accumulative Roll Bonding) oder durch einen Mikroschmiedeprozess (z.B. Kaltgasspritzen), mit zufriedenstellender Haftung miteinander zu einem Werkstückverbund verbunden werden. Falls erforderlich, kann jedoch auch jeder dem Fachmann für diesen Zweck bekannte Klebstoff zur Unterstützung des Verbindens verwendet werden.

Bei der Beschichtung kann es sich um jede beliebige Beschichtung für Metall und Metalloxide handeln und sie kann durch jegliche geeignete Weise aufgebracht werden.

Als Beispiele für solche Beschichtungen werden Lote, durch thermisches und nicht-thermisches Spritzen aufgebrachte Beschichtungen, Lacke, andere Beschichtungen mit glasartigen Materialien, Keramiken und anorganischorganischen oder organischen Materialien, die gegebenenfalls direkt auf der erfindungsgemäß hergestellten Oberfläche erzeugt werden, sowie mit biochemischen und biologischen Materialien, z.B. Zellen und/oder Körpergewebe, genannt.

Als spezielle Beispiele für Lacke und ähnliche Beschichtungen werden Polyurethan-, Acryl-, Vinyl- und Epoxidbasierte Beschichtungen sowie zinkreiche anorganische und anorganisch-organische Beschichtungen genannt. Ein weiteres Beispiel sind Silanbeschichtungen, z.B. zu Siloxanen polymerisierende Silane (erhältlich z.B. unter dem Handelsnamen Oxsilan®), die insbesondere auf Sauerstoffatome enthaltende erfindungsgemäß strukturierte Oberflächen aufgebracht werden können.

Falls eine Haftvermittler-Beschichtung verwendet wird, können u.a. SilanHaftvermittler auf die Oberfläche aufgebracht werden. Ein Beispiel für einen solchen Haftvermittler, der auf sauerstofffreie strukturierte Metalloberflächen aufgebracht werden kann, ist eine wässrige Lösung (Sol) von durch siliciumorganische Verbindungen aktivierten Zirkoniumsalzen, die nach dem Verdampfen des Wassers ein haftvermittelndes Gel liefert (erhältlich z.B. unter dem Handelsnamen SOCOGEL® oder Alodine® SG 8800).

Die strukturierten Oberflächen können, wie vorstehend erwähnt, auch chemisch auf jede dem Fachmann bekannte Weise modifiziert werden, z.B. durch chemische Umwandlung zur Herstellung von Konversionsschichten, die u.a. eine antikorrosive Wirkung besitzen. Hier können beispielsweise die klassische Chromatierung mit Chrom(VI), die Chromatierung mit Reagenzien auf der Basis von Chrom(III) (z.B. SurTec® 650), die chromfreie Zinkphosphatierung oder die Aufbringung von chromfreien Zirkonium-, Titan oder Vanadium-Umwandlungsschichten genannt werden.

Die folgenden Beispiele erläutern die Erfindung, ohne sie zu beschränken.

## BEISPIELE

### Beispiel 1

Ein gewalztes Blech aus der Legierung Ti-6Al-4V wurde ohne weitere Vorbehandlung einmal mit einem diodengepumpten $Nd:YVO_4$ (Neodym-gepumptem Yttrium-Orthovanadat)-Laser (Wellenlänge $\lambda$: 1064 nm) in Argonatmosphäre (Druck ca. 1,5 bar) und einmal in Stickstoffatmosphäre (Druck ca. 1,5 bar) bei Raumtemperatur abgetastet.

Die übrigen Verfahrensparameter waren:

$P_p$ (Impulsspitzenleistung der austretenden Laserstrahlung): 38 kW
$P_m$ (mittlere Leistung der austretenden Laserstrahlung): 6 W
t (Impulslänge der Laserimpulse): 17 ns
f (Repetitionsrate der Laserimpulse) 10 kHz
v (Abtastgeschwindigkeit an der Werkstückoberfläche): 800 mm/s
d (Durchmesser des Laserstrahls am Werkstück): 80 $\mu$m
$\alpha$ (Absorption der Laserstrahlung des bestrahlten Material): 15 %
$T_v$ (Siedepunkt des Materials bei Normaldruck): 3560 K
$c_p$ (Spezifische Wärmekapazität): 580 J/kgK
$\kappa$ (Spezifische Wärmeleitfähigkeit) 22 W/mK

Daraus ergibt sich $\varepsilon$ = **1,2**, d.h. $\varepsilon$ liegt im erfindungsgemäßen Bereich.

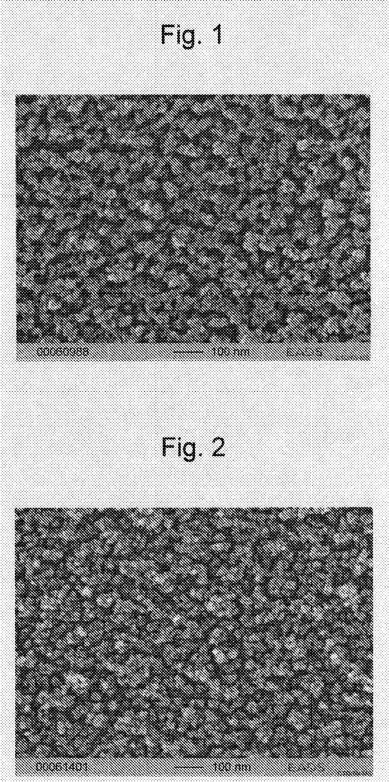

Die Oberflächenstrukturen der beiden Proben sind in der REM-Aufnahme der Figur 1 (Argon-Probe) und Figur 2 (Stickstoff-Probe) gezeigt.

Die elementare Zusammensetzung der Oberfläche der beiden Proben wurde nach der Laserbehandlung mittels X-Ray Photoelectron Spectroscopy (XPS) analysiert. Die Spektren wurden mit einem Physical Electronics Quantum 2000 System aufgezeichnet (bei 15 kV and 24 W), bei einem Druck in der Probenkammer von $6 \times 10^{-9}$ mbar, einer Eindringtiefe von 50 Å auf einer Fläche mit 100 mm Durchmesser (Sensitivitätsfaktoren: Kohlenstoff: 0.278; Sauerstoff: 0.780; Stickstoff: 0.477).

Die Ergebnisse sind in der folgenden Tabelle 1 zusammengefasst.

**Tabelle 1**

| Probe | At-% | | | | | | | | | | |
|---|---|---|---|---|---|---|---|---|---|---|---|
| | C | N | O | F | Na | Al | Si | Cl | Ca | Ti | V |
| Ti-6Al-4V laserbehandelt unter Ar-Atmosphäre | 19,8 | 0,7 | 58,1 | - | - | 3,0 | - | - | - | 17,4 | 1,0 |
| Ti-6Al-4V laserbehandelt unter $N_2$-Atmosphäre | 21,7 | 4,0 | 52,5 | - | - | 2,6 | - | - | - | 18,2 | 1,1 |

Wie aus der Tabelle ersichtlich ist, wird ein Teil des Sauerstoffs an der oxidierten Oberfläche der Legierung durch Stickstoff verdrängt, wenn die Laserbehandlung unter Stickstoffatmosphäre stattfindet.

**Beispiel 2**

Ein gewalztes Blech aus der Legierung Al2024 (Al-4.4Cu-1.5Mg-0.6Mn) wurde ohne irgendeine Vorbehandlung einmal mit einem diodengepumpten Nd:YAG (Neodym-gepumptem Yttrium-Aluminiumgranat)-Laser (Wellenlänge $\lambda$: 533 nm) in Sauerstoffatmosphäre (Druck 2 bar) bei Umgebungstemperatur abgetastet.
Die übrigen Verfahrensparameter waren:

$P_p$: 68 kW; $P_m$: 77 W; t: 57 ns; f: 20 kHz; v: 100 mm/s; d: 80 $\mu$m; $\alpha$: 45 %;
$T_v$: 2543 K; $c_p$: 897 J/kgK; $\kappa$: 80 W/mK
Daraus ergibt sich $\varepsilon$ = **1873**, d.h. $\varepsilon$ liegt im erfindungsgemäßen Bereich.

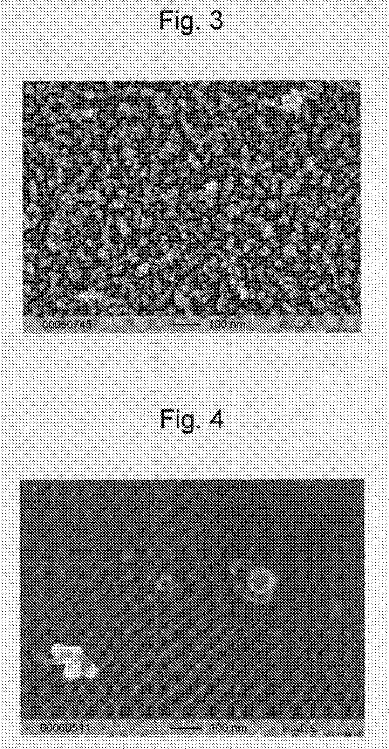

Die erzeugte Oberflächenstruktur der in Sauerstoffatmosphäre behandelten Probe ist in der REM-Aufnahme der Figur 3 gezeigt. Figur 4 zeigt zum Vergleich in der gleichen Vergrößerung eine unbehandelte Al2024 Oberfläche.
Die elementare Zusammensetzung der Oberfläche der beiden Proben wurde nach der Laserbehandlung mittels X-Ray Photoelectron Spectroscopy (XPS) analysiert. Die Spektren wurden mit einem Physical Electronics Quantum 2000 System aufgezeichnet (bei 15 kV and 24 W), bei einem Druck in der Probenkammer von 6 x 10$^{-9}$ mbar, einer Eindringtiefe von 50 Å auf einer Fläche mit 100 mm Durchmesser (Sensitivitätsfaktoren: Kohlenstoff: 0.278; Sauerstoff: 0.780; Stickstoff: 0.477).
Die Ergebnisse sind in der folgenden Tabelle 2 zusammengefasst.

**Tabelle 2**

| Probe | At-% | | | | | | | | | | |
|---|---|---|---|---|---|---|---|---|---|---|---|
| | C | N | O | F | Na | Al | Si | Cl | Ca | Ti | V |
| Al 2024 unbehandelt | 46,0 | 1,3 | 34,4 | 0,2 | 0,5 | 17,0 | 0,3 | 0,1 | 0,2 | - | - |
| Al 2024 laserbehandelt unter $O_2$-Atmosphäre | 12,8 | - | 62,3 | - | - | 24,7 | - | 0,2 | - | - | - |

Wie aus der Tabelle ersichtlich ist, hat der Sauerstoff bei der Laserbehandlung mit dem Kohlenstoff in der Probe unter Bildung eines Gases (CO oder $CO_2$) reagiert, das aus der Oberfläche verdampft ist. Gleichzeitig wurden erhebliche Mengen an Sauerstoff in der Oberfläche eingelagert.

**Beispiel 3** - **Verschleißbeständigkeitstest**

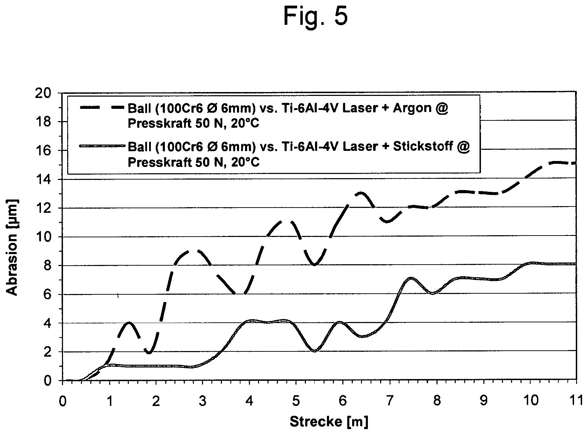

Durch eine chemische Modifikation kann beispielsweise die Verschleißbeständigkeit erhöht werden. Dies wurde an der unter Stickstoffatmosphäre mit Laser behandelten Probe der Legierung Ti-6Al-4V demonstriert.
Dazu wird bei einem sogenannten Ball-on-Plate-Test wird eine kugelförmige Geometrie auf die flache Probe gepresst. Die Platte, auf der die Probe befestigt ist, wird dabei hin und her bewegt. Der abrasive Verschleiß des tribologischen Systems wird dabei gemessen. Die eingesetzte Prüfvorrichtung war eine TE 800-Multi Station Friction von Plint & Partners Ltd, wobei ein Ball aus 100Cr6 mit einem Durchmesser von 8 mm verwendet wurde.
Wie in Figur 5 zu erkennen ist, ist der abrasive Verschleiß bei einer in N2-Atmosphäre nanostrukturierten Oberfläche deutlich geringer als bei einer in Ar-Atmosphäre nanostrukturierten Oberfläche.

**Patentansprüche**

1. Werkstück, umfassend eine Oberfläche aus einem Metall oder einer Metalllegierung oder einer Metalloxid- oder Metalllegierungsoxidschicht auf der Oberfläche des Metalls oder der Metalllegierung, **dadurch gekennzeichnet, dass** die Oberfläche eine chemisch modifizierte Oberflächenstruktur aufweist, die erzeugbar ist, indem die gesamte Oberfläche des Metalls oder der Metalllegierung oder der Metall- oder der Metalllegierungsoxidschicht auf dem Metall oder der Metalllegierung, die für eine Laserbestrahlung zugänglich ist und auf der die Strukturen zu erzeugen sind, mit einem gepulsten Laserstrahl ein- oder mehrmals auf solche Weise abgetastet wird, dass benachbarte Lichtflecke des Laserstrahls lückenlos aneinander stoßen oder sich überlappen, wobei die folgenden Bedingungen :

$$0{,}07 \leq \varepsilon \leq 2300$$

mit

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_V} \cdot \sqrt{c_P} \cdot \sqrt{\lambda}} \cdot 10^3 \, ,$$

worin:

$P_p$: Impulsspitzenleistung der austretenden Laserstrahlung [kW]
$P_m$: Mittlere Leistung der austretenden Laserstrahlung [W]
t: Impulslänge der Laserimpulse [ns], wobei t etwa 0,1 ns bis etwa 2000 ns ist,
f: Repetitionsrate der Laserimpulse [kHz]
v: Abtastgeschwindigkeit an der Werkstückoberfläche [mm/s]
d: Durchmesser des Laserstrahls am Werkstück [$\mu$m]
$\alpha$: Absorption der Laserstrahlung des bestrahlten Material [%] bei Normalbedingungen
$\lambda$: Wellenlänge der Laserstrahlung [nm], wobei $\lambda$ = etwa 100 nm bis etwa 11000 nm
$T_v$: Siedepunkt des Materials [K] bei Normaldruck
$c_p$: Spezifische Wärmekapazität [J/kg·K] bei Normalbedingungen
$\kappa$: Spezifische Wärmeleitfähigkeit [W/m·K] bei Normalbedingungen,

derart eingehalten werden, dass an der Oberfläche offenporige, zerklüftete und/oder fraktalartige Nanostrukturen, nämlich offenporige Berg- und Tal-Strukturen, offenporige hinterschnittene Strukturen und blumenkohlartige oder knollenartige Strukturen erzeugt werden, deren Abmessungen mit Ausnahme der Tallängen der Berg- und Tal-Strukturen unter 1 $\mu$m liegen, wobei die Länge der Täler bei den Berg- und Talstrukturen mehr als 1 $\mu$m beträgt, wobei mindestens 80% Erhebungen eine Größe im Bereich von 10 nm bis 200 nm aufweisen, wobei mindestens etwa 80% der Zwischenräume Breiten < 1 $\mu$m aufweisen, wobei die Atmosphäre, in der das Verfahren durchgeführt wird, ein mit der Oberfläche des Metalls oder der Metalllegierung oder der Metall- oder der Metalllegierungsoxidschicht auf dem Metall oder der Metalllegierung reagierendes Gas oder Gasgemisch ist.

2. Werkstück nach Anspruch 1, das dadurch erhältlich ist, dass der Druck der Atmosphäre im Bereich von etwa 0,001 mbar bis etwa 15 bar liegt und die Temperatur der Atmosphäre außerhalb des Laserstrahls im Bereich von etwa -50°C bis etwa 350°C liegt.

3. Werkstück nach Anspruch 1 oder 2, das dadurch erhältlich ist, dass $0{,}07 \leq \varepsilon \leq 2000$, mehr bevorzugt $0{,}07 \leq \varepsilon \leq 1500$.

4. Werkstück nach einem der Ansprüche 1 bis 3, das dadurch erhältlich ist, dass das reagierende Gas oder Gasgemisch aus einem anorganischen Gas oder Gasgemisch oder einem organischen oder organische Gruppen enthaltenden Gas oder Gasgemisch oder einer Mischung derselben ausgewählt ist, wobei das Gas oder Gasgemisch in Mischung mit einem Edelgas vorliegen kann.

5. Werkstück nach einem der Ansprüche 1 bis 4, das dadurch erhältlich ist, dass die Impulslänge der Laserimpulse t etwa 0,1 ns bis etwa 300 ns, mehr bevorzugt etwa 5 ns bis etwa 200 ns beträgt.

6.  Werkstück nach einem der Ansprüche 1 bis 5, das dadurch erhältlich ist, dass die Metalloberfläche vor dem Bestrahlen mit dem Laserstrahl nicht vorbehandelt oder gereinigt wird.

7.  Werkstück nach einem der Ansprüche 1 bis 6, das dadurch erhältlich ist, dass das Metall oder die Metalllegierung aus Eisen, Aluminium, Magnesium, Tantal, Kupfer, Nickel oder Titan oder einer Legierung derselben ausgewählt ist.

8.  Werkstück nach einem der Ansprüche 1 bis 7, das dadurch erhältlich ist, dass die Impulsspitzenleistung der austretenden Laserstrahlung $P_p$ etwa 1 kW bis etwa 1800 kW beträgt.

9.  Werkstück nach einem der Ansprüche 1 bis 8, das dadurch erhältlich ist, dass die mittlere Leistung der austretenden Laserstrahlung $P_m$ etwa 5 W bis etwa 28000 W beträgt.

10. Werkstück nach einem der Ansprüche 1 bis 9, das dadurch erhältlich ist, dass die Repetitionsrate der Laserimpulse f etwa 10 kHz bis etwa 3000 kHz beträgt.

11. Werkstück nach einem der Ansprüche 1 bis 10, das dadurch erhältlich ist, dass die Abtastgeschwindigkeit an der Werkstückoberfläche v etwa 30 mm/s bis etwa 19000 mm/s beträgt.

12. Werkstück nach einem der Ansprüche 1 bis 11, das dadurch erhältlich ist, dass der Durchmesser des Laserstrahls am Werkstück d etwa 20 $\mu$m bis etwa 4500 $\mu$m beträgt.

13. Werkstückverbund, der dadurch erhältlich ist, dass nach der Strukturierung der Oberfläche die Oberfläche mit oder ohne Klebstoff mit einer Oberfläche eines zweiten Werkstücks zu dem Werkstückverbund zusammengefügt wird oder mit einer Beschichtung versehen wird oder chemisch modifiziert wird.

**Claims**

1.  A workpiece, comprising a surface made of a metal or of a metal alloy, or a metal oxide layer or metal alloy oxide layer on the surface of the metal or on the metal alloy, **characterized in that** the surface has a chemically modified structure that can be produced by scanning once or several times by a pulsed laser beam the entire surface of the metal or the metal alloy, or the metal oxide layer or the metal alloy oxide layer on the metal or on the metal alloy, which surface or layer is accessible to laser radiation and on which the structures are to be generated, wherein the scanning is performed in such a way that adjacent flecks of light of the laser beam adjoin each other without an interspace in between or overlap, wherein the following conditions are satisfied

$$0{,}07 \le \varepsilon \le 2300$$

with

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_V} \cdot \sqrt{c_P} \cdot \sqrt{\lambda}} \cdot 10^3$$

wherein:

$P_p$: Pulse peak power of the exiting laser radiation [kW]
$P_m$: Average power of the exiting laser radiation [W]
t: Pulse length of the laser pulses [ns], wherein t is approximately 0,1 ns to approximately 2000 ns,
f: Repetition rate of the laser pulses [kHz]
v: Scanning speed on the workpiece surface [mm/s]
d: Diameter of the laser beam on the workpiece [$\mu$m]
$\alpha$: Absorption of the laser radiation of the irradiated material [%] under standard conditions
$\lambda$: Wavelength of the laser radiation [nm], wherein $\lambda$ = approximately 100 nm to approximately 11000 nm

$T_v$: Boiling point of the material [K] under standard pressure
$c_p$: Specific heat capacity [J/kg·K] under standard conditions
$\kappa$: Specific thermal conductivity [W/m·K] under standard conditions,

in such a manner that on surface open-pored, ragged and/or fractal-like Nanostructures, namely open-pored hill and valley structures, open-pored undercut structures and cauliflower-licke or nodule-like structures are generated, the dimensions of which are less than 1 $\mu$m, wherein the length of the valleys of the hill and valley structures is more than 1 $\mu$m, wherein at least approximately 80 % of the elevations have a size in the range of 10 nm to 200 nm, wherein at least approximately 80 % of the spaces between have a width < 1 $\mu$m, wherein an atmosphere, in which the method is carried out, is a gas or gas mixture that reacts with the surface of the metal or of the metal alloy, or the metal oxide layer or the metal alloy oxide layer on the metal or on the metal alloy.

2. Workpiece according to claim 1, wherein a pressure of the atmosphere is in a range of approximately 0.001 mbar to approximately 15 bar and a temperature of the atmosphere outside the laser beam is in a range of approximately -50 °C. to approximately 350 °C.

3. Workpiece according to claim 1 or 2, wherein $0{,}07 \leq \varepsilon \leq 2000$, more preferably $0{,}07 \leq \varepsilon \leq 1500$.

4. Workpiece according to any of the claims 1 to 3, obtainable by selecting the reacting gas or gas mixture from an inorganic gas or gas mixture, or an organic gas or a gas containing organic groups or gas mixture or a mixtrue of same, wherein the gas or gas mixture may be present in a mixture with a noble gas.

5. Workpiece according to any of the claims 1 to 4, obtainable by the pulse length of the laser pulses t being approximately 0,1 ns to approximately 300 ns, more preferably approximately 5 ns to approximately 200 ns.

6. Workpiece according to any of the claims 1 to 5, obtainable by the metal surface not being pretreated or cleaned prior to irradiating with the laser beam.

7. Workpiece according to any of the claims 1 to 6, obtainable by the metal or the metal alloy being selected from iron, aluminum, magnesium, tantalum, copper, nickel or titanium or an alloy of same.

8. Workpiece according to any of the claims 1 to 7, obtainable by the pulse peak power of the exiting laser radiation $P_p$ being approximately 1 kW to approximately 1800 kW.

9. Workpiece according to any of the claims 1 to 8, obtainable by the average power of the exiting laser radiation $P_m$ being approximately 5 W to approximately 28000 W.

10. Workpiece according to any of the claims 1 to 9, obtainable by the repetition rate of the laser pulses f being approximately 10 kHz to approximately 3000 kHz.

11. Workpiece according to any of the claims 1 to 10, obtainable by the scanning speed on the workpiece surface v being approximately 30 mm/s to approximately 19000 mm/s.

12. Workpiece according to any of the claims 1 to 11, obtainable by the diameter of the laser beam on workpiece d being approximately 20 $\mu$m to approximately 4500 $\mu$m.

13. Workpiece composite being obtainable by, after structuring the surface, bonding the surface with or without adhesive to a surface of a second workpiece into the workpiece composite or by being provided with a coating or being chemically modified.

**Revendications**

1. Pièce à usiner comprenant une surface d'un métal ou d'un alliage métallique ou d'une couche d'oxyde métallique ou d'alliage métallique sur la surface du métal ou de l'alliage métallique, **caractérisé en ce que** la surface présente une structure de surface chimiquement modifiée qui peut être produite par balayage de toute la surface du métal ou de l'alliage métallique ou de la couche d'oxyde métallique ou d'alliage métallique sur le métal ou l'alliage métallique, qui est accessible pour l'irradiation laser et sur laquelle les structures doivent être produites, avec un faisceau laser pulsé une ou plusieurs fois de telle sorte que des taches lumineuses adjacentes du faisceau laser viennent en butée ou se chevauchent sans espaces les uns contre les autres, où les conditions suivantes:

$$0,07 \leq \varepsilon \leq 2300$$

avec

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_V} \cdot \sqrt{c_P} \cdot \sqrt{\lambda}} \cdot 10^3$$

où

$P_p$: indique la puissance d'impulsion de pointe du rayonnement laser émergent [kW]
$P_m$: indique la puissance moyenne du rayonnement laser émis [W]
t: indique la longueur d'impulsion des impulsions laser [ns], où t est d'environ 0,1 ns à environ 2000 ns
f: indique la fréquence de répétition des impulsions laser [kHz]
v: indique la vitesse de balayage sur la surface de la pièce [mm/s]
d: indique le diamètre du faisceau laser sur la pièce [$\mu$m]
$\alpha$: indique l'absorption du rayonnement laser du matériau irradié [%] dans des conditions normales
$\lambda$: indique la longueur d'onde du rayonnement laser [nm], où $\lambda$ = d'environ 100 nm à environ 11000 nm
$T_v$: indique le point d'ébullition du matériau [K] à pression normale
$C_p$: indique la capacité calorifique spécifique [J/kg·K] dans des conditions normales
$\kappa$ : indique la conductivité thermique spécifique [W/m·K] dans des conditions normales,

sont maintenus de telle sorte que des nanostructures à pores ouverts, fissurées et/ou de type fractal, à savoir des structures de montagne et de vallée à pores ouverts, des structures à pores ouverts en contre-dépouille et des structures en chou-fleur ou en forme de tubercule sont produites en surface, dont les dimensions, à l'exception des longueurs de vallée des structures de montagne et de vallée, sont inférieures à 1 $\mu$m, la longueur des vallées dans les structures de montagne et de vallée étant supérieure à 1 $\mu$m, avec au moins 80 % d'élévations ayant une taille comprise entre 10 nm et 200 nm,
où au moins environ 80 % des interstices ont des largeurs < 1 $\mu$m, l'atmosphère dans laquelle le procédé est réalisé étant un gaz ou un mélange gazeux réagissant avec la surface du métal ou de l'alliage métallique ou la couche d'oxyde métallique ou d'alliage métallique sur le métal ou l'alliage métallique.

2. Pièce à usiner selon la revendication 1, qui peut être obtenue par une pression atmosphérique comprise entre environ 0,001 mbar et environ 15 bar et la température de l'atmosphère à l'extérieur du faisceau laser étant comprise entre environ -50°C et environ 350°C.

3. Pièce à usiner selon la revendication 1 ou 2, qui peut être obtenu en ce que $0,07 \leq \varepsilon \leq 2000$, de préférence $0,07 \leq \varepsilon \leq 1500$.

4. Pièce à usiner selon l'une quelconque des revendications 1 à 3, qui peut être obtenue par le gaz de réaction ou le mélange gazeux étant choisi parmi un gaz ou mélange gazeux inorganique ou un gaz ou mélange gazeux organique ou contenant des groupes organiques ou un mélange de ceux-ci, le gaz ou le mélange gazeux pouvant être en mélange avec un gaz rare.

5. Pièce à usiner selon l'une quelconque des revendications 1 à 4, qui peut être obtenue par la durée d'impulsion des impulsions laser t étant d'environ 0,1 ns à environ 300 ns, de préférence d'environ 5 ns à environ 200 ns.

6. Pièce à usiner selon l'une quelconque des revendications 1 à 5, qui peut être obtenue par la surface métallique n'étant prétraitée ou nettoyée avant l'irradiation par le faisceau laser.

7. Pièce à usiner selon l'une quelconque des revendications 1 à 6, qui peut être obtenue par le métal ou l'alliage métallique choisi parmi le fer, l'aluminium, le magnésium, le tantale, le cuivre, le nickel ou le titane ou un alliage de ceux-ci.

8. Pièce à usiner selon l'une quelconque des revendications 1 à 7, qui peut être obtenu par la puissance d'impulsion de pointe du rayonnement laser émergent Pp étant d'environ 1 kW à environ 1800 kW.

9. Pièce à usiner selon l'une quelconque des revendications 1 à 8 qui peut être obtenue par la puissance moyenne du rayonnement laser émergent $P_m$ étant d'environ 5 W à environ 28000 W.

10. Pièce à usiner selon l'une quelconque des revendications 1 à 9 qui peut être obtenue par la fréquence de répétition des impulsions laser f étant d'environ 10 kHz à environ 3000 kHz.

11. Pièce à usiner selon l'une quelconque des revendications 1 à 10, pouvant être obtenue par la vitesse de balayage à la surface de la pièce v étant d'environ 30 mm/s à environ 19000 mm/s.

12. Pièce à usiner selon l'une quelconque des revendications 1 à 11, qui peut être obtenue par le diamètre du faisceau laser sur la pièce d étant d'environ 20 $\mu$m à environ 4500 $\mu$m.

13. Liaison de pièces à usiner, qui peut être obtenue en joignant la surface avec ou sans adhésif avec une surface d'une deuxième pièce pour former ladite liaison ou en appliquant un revêtement ou en modifiant chimiquement la surface après la structuration de la surface.

## Fig. 1

## Fig. 2

## Fig. 3

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0914395 B1
- US 4947023 A
- US 4473446 A
- US 4394224 A
- DE 3427543

**In der Beschreibung aufgeführte Nicht-Patentliteratur**

- **LEAHY, W. ; YOUNG, T. ; BUGGY, M. ; BARRON, V.** A Study of Environmentally Friendly Titanium Pretreatments for Adhesive Bonding to a Thermoplastic Composite. *Materialwissenschaft und Werkstofftechnik,* 2003, vol. 34, 415-420